# EUROPÄISCHE PATENTSCHRIFT

(11) **EP 0 637 438 B1**
(45) Veröffentlichungstag und Bekanntmachung des Hinweises auf die Patenterteilung: **13.01.1999**
(21) Anmeldenummer: 94110430.9
(22) Anmeldetag: 05.07.1994
(51) Int. Cl.: A61C 17/20

(54) **Zahnärztliches Zahnreinigungsinstrument**
Apparatus for dental cleaning
Appareil pour le nettoyage des dents

(30) Priorität: 02.08.1993 DE 4325933
(43) Veröffentlichungstag der Anmeldung: 08.02.1995
(73) Patentinhaber: KALTENBACH & VOIGT GMBH & CO., 88400 Biberach (DE)
(72) Erfinder: Logé, Hans, D-88400 Biberach (DE)
(74) Vertreter: Schmidt-Evers, Jürgen, Dipl.-Ing.

(56) Entgegenhaltungen:
- EP-A- 0 158 136
- DE-A- 3 032 022
- FR-A- 2 550 439

## Beschreibung

Im Bereich der Zahnpflege gibt es eine Vielzahl Zahnreinigungsinstrumente. Von diesen ist zunächst die für den täglichen Gebrauch bestimmte maschinelle Zahnbürste zu nennen, die nicht nur zur Reinigung der Zähne von Speiseresten, sondern auch deren Hohlräumen und des Zahnfleisches und somit zur Reinigung der Mundhöhle dient und von der die Mundhöhle besitzenden Person bedient wird. Mit diesem Zahnreinigungsinstrument werden die Zähne von leicht anhaftenden Belägen wie den Speiseresten befreit, wobei diesem Zahnreinigungsinstrument auch die Reinigung der Zahnlücken und den Übergängen zwischen den Zahnhälsen und dem Zahnfleisch zukommt. Ein solches Zahnreinigungsinstrument ist eine Bürste mit einer Vielzahl verhältnismäßig weicher Borsten, von denen in der Regel eine Vielzahl Borstengruppen vorgesehen ist, zwischen denen sich kleine Abstände befinden. Der maschinelle Antrieb einer solchen Zahnbürste erfolgt mit einer höheren Frequenz und mit einer kleineren Amplitude als wie es bei manuell zu bedienenden Zahnbürsten der Fall ist. Da eine Beaufschlagung des Zahnfleisches mit übermäßigem Druck schädlich ist, sind maschinell angetriebene Zahnbürsten mit einem Drucksensor entwickelt worden, der ein sichtbares Warnsignal erzeugt, wenn eine quer zum Bürstenschaft gerichtete Belastung der Zahnbürste einen vorgegeben Wert übersteigt.

Dem gegenüber gibt es Zahnreinigungsinstrumente, nämlich sogenannte Zahnsteinentfernungsgeräte, die vom Zahnarzt oder Dentist in dessen Praxis zur Behandlung von Patienten benutzt werden (s. z.B. DE 33 28 604 A1, DE 33 28 605 A1). Hierbei handelt es sich um maschinell angetriebene Zahnsteinentfernungsgeräte mit einem drahtförmigen, nur eine Spitze aufweisenden Werkzeug, das mit einer hohen Frequenz und kleiner Amplitude maschinell angetrieben wird, wobei die schnabelartig gekrümmte Werkzeugspitze aus hartem Metall mit quer zu ihrem Schaft gerichteten Schwingungen angetrieben wird und somit wegen der bogenschnabelförmig gekrümmten Spitze schlagend, jedoch schonend auf die Zahnoberfläche auftrifft und dabei auch festsitzendem Zahnstein zu entfernen vermag.

Es gibt auch sehr dünne Zahnbeläge, wie Zahnoberflächenverfärbungen, für die sich ein vorbeschriebenes Zahnsteinentfernungsgerät nicht eignet.

Zur Reinigung der Zähne von Oberflächenverfärbungen ist ein Gerät bekannt geworden, bei dem ein mit warmem Wasser vermischtes Reinigungspulver unter Druck auf die Zahnoberfläche gespritzt wird, wobei die Oberflächenverfärbungen von dem Reinigungspulver abgetragen werden. Es wird ein wasserlösliches Reinigungspulver wie Nitriumcarbonat verwendete, das sich bei der Behandlung im Wasser auflöst, so daß keine körnigen Rückstände in der Mundhöhle verbleiben. Das Wasser wird mittels eines Absauggerätes aus dem Mund entfernt. Diese ebenfalls von einem Zahnarzt oder Dentisten zu benutzende Zahnreinigungsinstrument hat sich in der Praxis zwar bewährt, jedoch ist eine Behandlung insbesondere für empfindliche Patienten unangenehm, weil es wegen des Natriumcarbonats einen ungewöhnlichen Geschmack im Mundraum hinterläßt. Außerdem darf dieses bekannte Zahnreinigungsinstrument nicht bei solchen Patienten angewandt werden, die eine warme Diät einhalten müssen, an einer schweren Erkrankung der Atmungsorgane leiden und Kontaktlinsen tragen.

In der DE 30 32 022 A1 ein Vibrationsgerät für Gebißpflege beschrieben, bestehend aus einem länglichen Handstück, von dem ein Vibrationsschaft vorragt, an dessen freien Ende ein pilzkopfförmiger Arbeitskörper aus elastischem Material lösbar befestigt ist.

Ein Zahnreinigungsgerät der im Obergegriff des Anspruchs 1 angegebenen Art ist in der EP-A-0 158 136 beschrieben. Bei diesem bekannten Gerät handelt es sich um ein ultraschallbetriebenes Dentalgerät zum Reinigen, Polieren und/oder Schleifen von Zähnen, das ein langgestrecktes Handstück aufweist, in dem ein die mechanischen Schwingungen erzeugender elektromagnetischer Wandler angeordnet ist, der im Funktionsbetrieb eine im Handstück gelagerte axiale Schwingwelle in Schwingungen versetzt. Mit dem vorderen Ende der Schwingwelle ist ein Werkzeug durch eine Schraubverbindung lösbar verbindbar, das durch einen rohrförmigen Schaft gebildet ist, an dessen vorderem Ende eine Vielzahl von zu einem Bündel zusammengefaßten Einzeldrähten aus Stahl befestigt sind, deren Drahtspitzen in einer Arbeitsfläche liegen.

Der Erfindung liegt die Aufgabe zugrunde, ein zahnärztliches Zahnreinigungsinstrument der eingangs angegebenen Art so auszugestalten, daß es sowohl Zahnbelag als auch Verfärbungen auf der Zahnfläche zu entfernen vermag.

Diese Aufgabe wird durch die Merkmale des Anspruchs 1 gelöst.

Das erfindungsgemäße Zahnreinigungsinstruments ist mit einem durch dem Werkzeugkopf und das Drahtpaket gebildeten Reinigungskopf flächig wirksam, wobei die wirksame Bearbeitungsfläche eine aus punktuellen Teilflächen, die durch die Spitzen der Drähte gebildet sind, bestehende Fläche ist. Hierdurch ist es nicht nur leistungsfähig, sondern es vermag auch Verfärbungen der Zahnoberfläche schnell bzw. leistungsfähig zu reinigen oder abzutragen. Bei einem Abtrag von Zahnbelag wie Zahnstein ist das eingangs beschriebene Zahnsteinentfernungsgerät zwar ziemlich leistungsfähig, weil der Zahnstein bei der Bearbeitung abplatzt, jedoch sind die Restspuren des Zahnsteins mit diesem Zahnsteinentfernungsgerät nur mit großem Handhabungs- und Zeitaufwand zu reinigen bzw. abzutragen. Dagegen ermöglicht das erfindungsgemäße Zahnreinigungsinstrument eine leistungsfähige Reinigung bzw. einen leistungsfähigen Abtrag auch von Zahnsteinresten. Ebenfalls vorteilhaft und rationell ist das erfindungsgemäße Zahnreinigungsinstrument zur Reinigung bzw. zum Abtrag von Verfärbungen der Zahnoberfläche einzusetzen. Aufgrund des flächigen Angriffs lassen sich auch Reststellen der Verfärbungen mit geringem Handhabungs- und Zeitaufwand entfernen.

Im Rahmen der Erfindung ist es möglich, den Reinigungskopf so schwingend anzutreiben, daß er parallel und/oder quer zur Zahnoberfläche, d.h. reibend und/oder schlagend an der Zahnoberfläche wirkt. Dabei ermöglicht der flächige Angriff des erfindungsgemäßen Reinigungskopfes zum einen die vorerwähnte rationelle Arbeitsweise und zum anderen eine gleichzeitige und gleichmäßige Reinigung eines verhältnismäßig großen Flächenteils der Zahnoberfläche, was insbesondere bei der Entfernung einer Verfärbung von Bedeutung ist, um eine gleichmäßige Naturfarbe der behandelnden Fläche zu erreichen.

In den Unteransprüchen sind Merkmale enthalten, die zur Problemlösung beitragen, die Wirksamkeit des Zahnreinigungsinstruments verbessern, unterschiedliche Reinigungsmaßnahmen durch Austausch unterschiedlicher Reinigungsköpfe ermöglichen, eine vorteilhafte Beleuchtung und/oder Kühlung und/oder Spülung der Behandlungsfläche gewährleisten und außerdem zu einfachen, praktischen kostengünstig herstellbaren Bauweisen führen.

Nachfolgend werden die Erfindung und weitere durch sie erzielbare Vorteile anhand von bevorzugten Ausführungsbeispielen näher erläutert. Es zeigt:

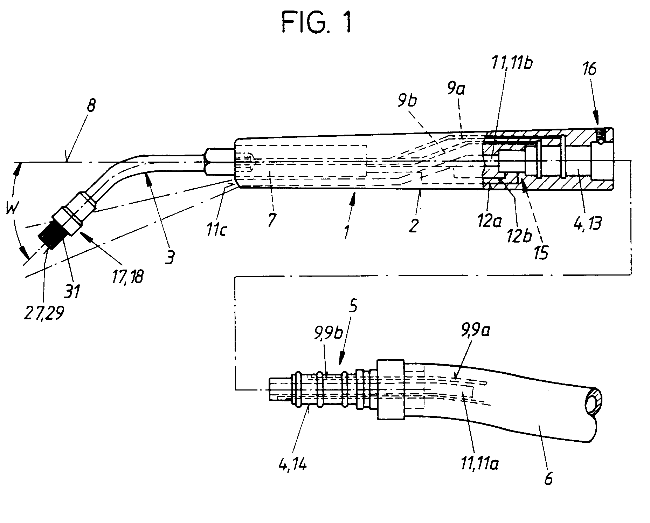

- Fig. 1: ein erfindungsgemäßes Zahnreinigungsinstrument in der Seitenansicht;
- Fig. 2: das vordere Ende des Zahnreinigungsinstruments mit einem Zahnreinigungswerkzeug in vergrößerter Darstellung und teilweise axialem Schnitt;
- Fig. 3: eine Schutzkappe für den Kopf des Zahnreinigungswerkzeugs im axialen Schnitt;
- Fig. 4: einen Reinigungskopf für das Zahnreinigungswerkzeug im axialem Schnitt und in abgewandelter Ausgestaltung.

Die Hauptteile des Zahnreinigungsinstruments 1 in Form eines Handstücks sind eine Griffhülse 2, die an ihrem vorderen Ende ein Zahnreinigungswerkzeug 3 lösbar trägt und an ihrem hinteren Ende durch eine Schnellkupplung oder eine sogenannte Steck/Drehkupplung 4 mit einem Anschlußstück 5 lösbar verbunden ist, das am vorderen Ende eines flexiblen Versorgungsschlauchs 6 befestigt ist.

Im vorderen Bereich der Griffhülse 2 ist ein andeutungsweise dargestellter Schwingungserzeuger 7 angeordnet, der so in der Griffhülse gelagert und mit dem Zahnreinigungswerkzeug 3 verbunden ist, daß er längs oder quer zur Mittelachse 8 der Griffhülse 2 gerichtete Schwingungen auf das von der Griffhülse 2 nach vorne ragende Zahnreinigungswerkzeug 3 zu übertragen vermag.

Durch den Versorgungsschlauch 6, die Steck/Drehkupplung 4 und die Griffhülse 2 verlaufen mehrere Versorgungsleitungen, bei denen es sich beim vorliegenden Ausführungsbeispiel um eine Versorgungsleitung 9 für Druckluft und/oder Spülflüssigkeit, insbesondere Wasser, wobei es sich auch um einen Spray handeln kann, eine Versorgungsleitung 11, die der Beleuchtung der Behandlungsstelle dient, und zwei Versorgungsleitungen 12 a, 12b, bei denen es sich um elektrische Versorgungsleitungen eines Stromkreises handelt, an dem der elektrische Schwingungserzeuger 7 angeschlossen ist.

Die Steck/Drehkupplung 4 ist durch eine im Querschnitt runde Kupplungsausnehmung 13 und einen darin einsteckbaren und drehbaren Kupplungszapfen 14 gebildet, wobei der Kupplungszapfen 14 von der Griffhülse 2 nach hinten weisend und die Kupplungsausnehmung im vorderseitigen Ende des Anschlußstücks 5 angeordnet sein können oder - wie beim vorliegenden Ausführungsbeispiel - die Kupplungsausnehmung 13 am hinteren Ende der Griffhülse 2 und der Kupplungszapfen 14 vom Anschlußstück 5 nach vorne ragend angeordnet sein können.

Die Versorgungsleitungen sind im Bereich der Steck/Drehkupplung 4 trennbar und wieder zusammensteckbar, so daß beim Trennen und Anstecken der Griffhülse 2 am Anschlußstück 5 die Versorgungsleitungsabschnitte selbsttätig getrennt und wieder miteinander verbunden werden. Hierbei kann es sich um an sich bekannte Ausgestaltungen handeln.

Beim vorliegenden Ausführungsbeispiel durchsetzt die Versorgungsleitung 11 die Steck/Drehkupplung 4 koaxial, und sie wird durch einen an sich bekannten Lichtleiter aus Glas und/oder Kunststoff oder Fasern derselben gebildet, dessen Lichtleiterabschnitte 11a, 11b am vorderen Ende des Kupplungszapfens 14 getrennt sind und im gekuppelten Zustand einander gegenüber liegen.

Für die Zuführung von Kühl- oder Spülflüssigkeit bzw. ein Spray und Druckluft sind eine gemeinsame oder zwei Versorgungsleitungen 9a, 9b vorgesehen, die zunächst axial im Kupplungszapfen 14 verlaufen, die Trennfuge der Steck/Drehkupplung abgedichtet radial durchsetzen und dann wieder axial in der Griffhülse 2 weitergeführt sind, wobei an der Trennfuge eine Umfangsnut im Kupplungszapfen 14 oder in der Wandung der Kupplungsausnehmung 13 angeordnet ist. Hierdurch ist eine unbegrenzte Drehung der Griffhülse 2 ohne Unterbrechung des Durchganges der Medien möglich.

Ein entsprechender Verlauf mit radialer Durchsetzung der Trennfuge der Steck/Drehkupplung 4 ist auch für die elektrischen Versorgungsleitungen 12a, 12b vorgesehen, wobei an der Trennfuge Schleifringe und damit zusammenwirkende Kontakte bei 15 angeordnet sind, so daß auch die Stromzuführung und -abführung von einer Drehung der Griffhülse 2 unabhängig ist.

Der Steck/Drehkupplung 4 ist auch noch eine selbsttätig ein- und ausrastende Rastvorrichtung 16 zugeordnet, wodurch eine unbeabsichtigte Entkupplung verhindert ist. Eine solche an sich bekannte Rastvorrichtung 16 kann durch ein radial federnd gelagertes Rastelement, z.B. eine Kugel, vorzugsweise in der Griffhülse 2 gebildet sein, die mit einer Umfangsnut vorzugsweise am Kupplungszapfen 14 zusammenwirkt.

Eine vorbeschriebene Steck/Drehkupplung 4 einschließlich der sie durchsetzenden Versorgungsleitungen ist in mehreren Ausführungsbeispielen in DE-33 28 604 A1 und DE-33 28 605 C2 beschrieben. Aus rationellen Gründen wird deshalb die Steck/Drehkupplung 4 in speziellen Einzelheiten nicht weiter beschrieben, sondern es wird auf die in den vorgenannten Druckschriften beschriebenen Ausgestaltungen im vollem Umfang Bezug genommen.

Das Zahnreinigungswerkzeug 3 ist ein stangenförmiges, mit einem freien Endbereich stumpfwinklig abgewinkeltes Bauteil, das an seinem rückwärtigen Ende vorzugsweise lösbar mit der Griffhülse 2 verbunden ist und an seinem vorderen Ende lösbar einen Werkzeugkopf 17 als Teil eines Reinigungskopfes 18 trägt und somit ein Träger des Werkzeugkopfes 17 ist. Zur Befestigung des Zahnreinigungswerkzeugs 3 kann eine Schraubverbindung vorzugsweise mit einem Außengewinde 19a an einem rückwärtigen Gewindezapfen 20 des Zahnreinigungswerkzeugs 3 und einem Innengewinde 19b in einem entsprechenden insbesondere koaxialen Gewindeloch 19 der Griffhülse 2 bzw. eines den Schwingungserzeuger 7 tragenden und in der Griffhülse 2 schwingbar gelagerten Basisteils 21 vorgesehen sein. Im hinteren Endbereich des Zahnreinigungswerkzeugs 3 ist ein Drehangriffselement vorzugsweise in Form eines Vier- oder Sechskants 22 für einen Schraubschlüssel angeordnet, mittels dem das Zahnreinigungswerkzeug 3 wählweise montiert und demontiert werden kann. Der durch einen Schaft 23 des Zahnreinigungswerkzeugs 3 gebildete Träger für den Werkzeugkopf 17 ist vorzugsweise durch ein Rohr mit einer verhältnismäßig dicken Wandung gebildet, dessen freier Hohlraum als Versorgungsleitung für Druckluft und/oder Spülflüssigkeit bzw. einen Spray dienen kann. Bei der vorliegenden Ausgestaltung mündet die für Druckluft und/oder Spülflüssigkeit bzw. Spray gemeinsame Versorgungsleitung 9 als Kanal oder Rohrleitung in der Griffhülse 2 in den Hohlraum 24 des Schaftes 23, wobei der zugehörige Kanal 25 koaxial nach vorne in das Gewindeloch 19 mündet. Der dichte Verschluß der Schraubverbindung ist durch eine Dichtung am freien Rand des Gewindelochs 19 gewährleistet, hier eine Innenkonusfläche 19c am Rand des Gewindelochs 19 und eine passende Außenkonusfläche im Fußbereichs des Gewindezapfens 20.

Der Reinigungskopf 18 weist eine Vielzahl Reinigungsspitzen 27 auf, die in einer quer zu seiner Längsmittelachse 28 angeordneten Angriffsfläche 29 liegen, die eben, gekrümmt oder beim vorliegenden Ausführungsbeispiel eben und radial sein kann.

Beim vorliegenden Ausführungsbeispiel weist der Reinigungskopf 18 eine Vielzahl dünner Stifte oder Drähte 31 auf, die achsparallel angeordnet sind, aneinander liegen und somit ein Drahtbüschel bilden. Die einzelnen Drähte 31 bestehen aus einem elastischen Kunststoff, das imstande ist, einen Zahnbelag und eine Färbung der Zahnoberfläche durch die Schwingungsbewegung, in die das Werkzeug im Betrieb versetzt wird, abtragen zu können. Die Querschnittsgröße der Drähte 31 beträgt etwa 0,02mm bis 0,2mm, vorzugsweise etwa 0,05mm bis 0,08mm.

Die Drähte 31 sind gebündelt und unlösbar an einem Sockel 32 des Werkzeugkopfes 17 befestigt, der durch eine sicherbare Steckfassung oder durch eine Schraubverbindung lösbar mit dem Schaft 23 verbunden ist. Der Sockel 32 weist vorzugsweise eine Hülse 33 auf, in der das Drahtpaket topfförmig aufgenommen und darin z.B. durch Klemmwirkung oder Kleben befestigt ist.

Das Drahtpaket kann zu seiner Halterung als vorfertigbares Bauteil an seiner Rückseite 34 verklebt sein. Die Halterung im Sockel 32 kann durch die gleiche Verklebung oder durch eine besondere Verklebung oder auch durch Quetschen der Umfangswand der Hülse 33 gebildet sein.

Vorzugsweise sind die Drähte 31 in Ringform angeordnet, so daß sie einen Längskanal 35 umschließen der eine Verlängerung des Hohlraums 24 ist und somit einen Versorgungsleitungsabschnitt für Druckluft und/oder Spülflüssigkeit bzw. Spray bildet. Diese Medien treffen somit an einer bezüglich der Behandlungsstelle günstigen Position auf, nämlich an oder in der Angriffsfläche 29. Zur Erleichterung der Herstellung oder Verbesserung der Stabilität des Drahtpakets kann im hinteren Bereich des Längskanals 35 eine Innenhülse 36 ggf. mit einem die Rückseite 34 hintergreifenden Flansch angeordnet und vorzugsweise darin durch Kleben, Schweißen oder Löten befestigt sein. Vorzugsweise weist die Hülse 33 eine Innenschulter 37 auf, die der rückwärtigen Abstützung des Drahtpakets dienen kann. Im Bereich dieser Innenschulter 37 können in der Hülse 33 eine oder mehrere auf den Umfang verteilt angeordnete Querbohrungen 38 angeordnet sein, die der Verklebung dienen können.

Bei der vorliegenden Schraubverbindung für den Reinigungskopf 18 bzw. den Sockel 32 weist die vorzugsweise im Bereich der Innenschulter 37 bzw. der Querbohrungen 38 nach hinten verjüngte Hülse 33 ein Innengewinde 39a auf, mit dem sie auf ein Außengewinde am vorderen Ende des Schaftes 23 aufgeschraubt ist, was vorzugsweise durch ein nicht dargestelltes Drehangriffselement möglich ist, an das ein Drehwerkzeug ansetzbar ist.

Bei der vorliegenden Ausgestaltung ist das Drahtpaket im Querschnitt rund ausgebildet, wobei sein Außendurchmesser etwa 3mm beträgt und der Durchmesser des Längskanals 35 etwa 1mm beträgt. Die Länge L der Drähte 31 beträgt etwa 3mm bis 10 mm vorzugsweise etwa 6mm.

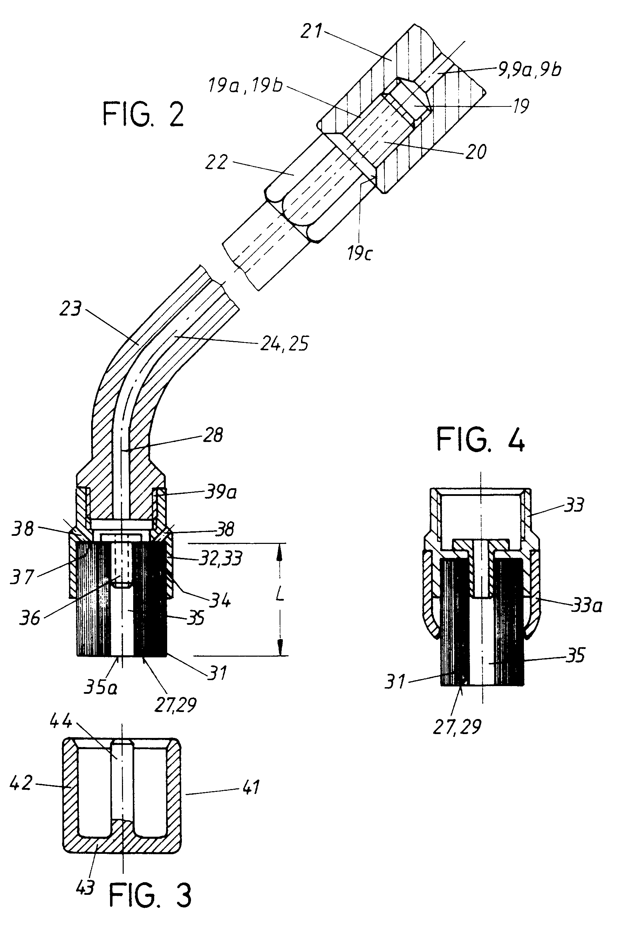

Da es sich bei den Drahtspitzen um empfindliche Elemente handelt, ist es vorteilhaft, dem Reinigungskopf 18 eine Schutzkappe 41 anzuordnen, die die Drähte bei Nichtgebrauch wirksam schützt. Die in Fig. 3 dargestellte Schutzkappe besteht aus einer zylindrischen Umfangswand 42, einer Deckelwand 43 und einem Stift 44, der mit geringem Bewegungsspiel in den Längskanal 35 einsteckbar ist. Vorzugsweise ist die Außenkante der Hülse 33 und/oder die Innenkante der Umfangswand 42 und/oder die Spitze des Stifts 44 gerundet oder angefast, um das Aufstecken der Schutzkappe 41 zu erleichtern. In der aufgesteckten Position kann die Umfangswand 42 oder der Stift 44 mit den Drähten 31 radial klemmend zusammenwirken. Es ist auch vorteilhaft, die Umfangswand 42 so groß zu bemessen, daß sie die Hülse 33 überlappt, wobei sie mit dieser klemmend zusammenwirken kann. Wenn der Stift 44 so lang bemessen ist, daß sein freies Ende an der Innenhülse 36 anliegt und zwischen der Deckelwand 43 und den Drahtspitzen ein Abstand verbleibt, werden die Drahtspitzen vor einem Kontakt mit der Deckelplatte 43 und vor Beschädigung verschont.

Beim Ausführungsbeispiel nach Fig. 4, bei der gleiche oder vergleichbare Teile mit gleichen Bezugszeichen versehen sind, ist das Drahtpaket in einer Hülse 33 aufgenommen, die vorzugsweise außen gegenüber dem rückseitigen Ende der Hülse 33 verjüngt ist, wobei eine Deckhülse 33a auf der Hülse 33 sitzt, die vorzugsweise nach dem Befestigen des Drahtpakets in der Hülse 33 aufgeschoben wird, wodurch eine einfache Herstellung und ein sauberer Abschluß erzielt wird. Der vordere Randbereich der Deckhülse 33a kann nach innen eingebörtelt sein, wobei er das Drahtpaket begrenzen oder auch radial einklemmen kann.

Dem Zahnreinigungsinstrument 1 sind vorzugsweise mehrere unterschiedliche Reinigungsköpfe 18 zugeordnet, die wahlweise austauschbar sind. Hierbei kann es sich um unterschiedliche Größen, Formen und Reibleistungen oder auch Härten handeln.

Die Abriebwirksamkeit der Reinigungsspitzen 27 oder Drahtspitzen kann durch eine Beschichtung mit Hartstoffen, insbesondere aus Metall, verbessert werden.

Zum Einschalten des Zahnreinigungsinstrumentes 1 und/oder des Schwingungserzeugers 7 und/oder eines der Medien (Druckluft, Spülflüssigkeit, insbesondere Wasser, oder Spray, Licht) können ein oder jeweils mehrere Schalter in Form von Handschaltern (nicht dargestellt) am Zahnreinigungsinstrument 1 oder an der Griffhülse 2 vorgesehen sein, oder es kann auch ein entsprechend ausgebildeter Fußschalter vorgesehen sein.

Der Lichtleiterabschnitt 11b endet an einer Lichtaustrittsöffnung 11c am vorderen Ende der Griffhülse 2, insbesondere an der Seite, zu der hin der Reinigungskopf 18 abgewinkelt ist. Die Lichtaustrittsöffnung 46 ist auf die Behandlungsstelle bzw. den Reinigungskopf 18 gerichtet.

Aufgrund der abgewinkelten Anordnung des Reinigungskopfes 18 bezüglich der Längsmittelachse der vorzugsweise geraden Griffhülse 2 ergibt sich eine handhabungsfreundliche Position des Reinigungskopfes 18 bezüglich zu erwartender Zahnstellungen, wobei auch unzugängliche Zahnoberflächen handhabungsfreundlich erreichbar sind. Der Winkel W, um den der Reinigungskopf 18 abgewinkelt ist, beträgt etwa 20 bis 50 Grad vorzugsweise etwa 30 bis 45 Grad.

Es hat sich bei Versuchen gezeigt, daß bei einer durch Drähte 31 oder Bersten gebildeten Angriffsfläche 29 dann eine wirksame Reinigung der Zahnoberfläche erreicht wird, wenn die Reinigungsspitzen reibend und/oder schonend schlagend auf die Zahnoberfläche auftreffen. Diese Wirkungsweise läßt sich vorzugsweise durch einen abgewinkelten Reinigungskopf 18 erreichen.

## Patentansprüche

1. Zahnärztliches Zahnreinigungsinstrument (1) mit einem länglichen Handstück, das an seinem vorderen Ende ein Zahnreinigungswerkzeug (3) trägt, das durch einen dem Zahnreinigungsinstrument (1) zugeordneten, motorisch angetriebenen Schwingungserzeuger (7) in Schwingungen versetzbar ist, wobei das Zahnreinigungswerkzeug (3) mehrere nebeneinander angeordnete Drähte (31) aufweist, deren Drahtspitzen in einer Angriffsfläche (29) liegen, und die aus einem Material bestehen, das imstande ist, einen Zahnbelag oder eine Färbung der Zahnoberfläche durch die Schwingungsbewegung abzutragen, wobei das Zahnreinigungsinstrument (1) an einen Versorgungsschlauch (6) mit Energie- und/oder Medienleitungen angeschlossen oder lösbar anschließbar ist,
**dadurch gekennzeichnet**,
daß die Drähte (31) aus elastischem Kunststoff bestehen, in Form eines Drahtpaketes aneinanderliegen und in einem topfförmigen Werkzeugkopf (17) aufgenommen und befestigt sind, der lösbar mit einem Träger des Zahnreinigungswerkzeugs (3) verbunden ist.

2. Zahnreinigungsinstrument nach Anspruch 1,
**dadurch gekennzeichnet**,
daß die Angriffsfläche (29) eben, gekrümmt oder bezgl. der Längsmittelachse (28) des Werkzeugkopfes (18) radial verläuft.

3. Zahnreinigungsinstrument nach Anspruch 1 oder 2,
**dadurch gekennzeichnet**,
daß die Drähte eine Querschnittsabmessung von etwa 0,02 mm bis 0,2 mm aufweisen.

4. Zahnreinigungsinstrument nach einem der vorhergehenden Ansprüche,
**dadurch gekennzeichnet**,
daß die Drähte eine Querschnittsabmessung von etwa 0,05 mm bis 0,08 mm aufweisen.

5. Zahnreinigungsinstrument nach einem der vorhergehenden Ansprüche,
**dadurch gekennzeichnet**,
daß der Träger ein vom Handstück vorragender Schaft (23) ist.

6. Zahnreinigungsinstrument nach Anspruch 5,
**dadurch gekennzeichnet**,
daß der Schaft (23) rohrförmig ausgebildet ist.

7. Zahnreinigungsinstrument nach Anspruch 5 oder 6,
**dadurch gekennzeichnet**,
daß der Werkzeugkopf (17) bezgl. des Fußendes des Schaftes (23) um einen spitzen Winkel (W) abgewinkelt ist.

8. Zahnreinigungsinstrument nach Anspruch 7,
**dadurch gekennzeichnet**,
daß der Winkel (W) etwa 30° bis 60° beträgt.

9. Zahnreinigungsinstrument nach Anspruch 8,
**dadurch gekennzeichnet**,
daß der Winkel (W) etwa 45° beträgt.

10. Zahnreinigungsinstrument nach einem der vorhergehenden Ansprüche,
**dadurch gekennzeichnet**,
daß mehrere Werkzeugköpfe (17) mit Drähten (31) vorgesehen sind, die wahlweise mit dem Träger verbindbar sind.

11. Zahnreinigungsinstrument nach einem der vorhergehenden Ansprüche,
**dadurch gekennzeichnet**,
daß ihm eine auf den Werkzeugkopf (17) bzw. die Behandlungsfläche gerichtete Beleuchtungseinrichtung zugeordnet ist.

12. Zahnreinigungsinstrument nach Anspruch 11,
**dadurch gekennzeichnet**,
daß die Beleuchtungseinrichtung einen Lichtleiter (11) mit einer Lichtaustrittsfläche am vorderen Ende des Handstücks aufweist.

13. Zahnreinigungsinstrument nach einem der vorhergehenden Ansprüche,
**dadurch gekennzeichnet**,
daß ihm eine Spül- und/oder Kühleinrichtung mit einer auf den Werkzeugkopf (17) bzw. die Behandlungsstelle gerichteten Austrittsöffnung (35a) für das Spül- und/oder Kühlmedium zugeordnet ist.

14. Zahnreinigungsinstrument nach einem der vorherigen Ansprüche,
**dadurch gekennzeichnet**,
daß sich im hinteren Bereich des Zahnreinigungswerkzeugs (3) oder über dessen gesamte Länge ein Kanal (24, 25) für ein Spül- und/oder Kühlmedium erstreckt, dessen Mündung auf die Behandlungsstelle gerichtet ist.

15. Zahnreinigungsinstrument nach Anspruch 14,
**dadurch gekennzeichnet**,
daß der Kanal (25) sich durch das Drahtpaket erstreckt.

16. Zahnreinigungsinstrument nach einem der vorhergehenden Ansprüche,
**dadurch gekennzeichnet**,
daß das Zahnreinigungswerkzeug (3) lösbar mit dem Handstück verbunden ist.

17. Zahnreinigungsinstrument nach Anspruch 16,
**dadurch gekennzeichnet**,
daß mehrere Zahnreinigungswerkzeuge (3) unterschiedlicher Werkstoffe, Härte, Form, Leistung (grob, fein) und/oder Größe, vorgesehen sind, die wahlweise mit dem Handstück verbindbar sind.

18. Zahnreinigungsinstrument nach einem der vorhergehenden Ansprüche,
**dadurch gekennzeichnet**,
daß das Handstück durch eine Steck/Drehkupplung (4) lösbar mit einem Anschlußstück (5) verbindbar ist.

19. Zahnreinigungsinstrument nach einem der vorhergehenden Ansprüche,
**dadurch gekennzeichnet**,
daß die Schwingungsamplituden des Zahnreinigungswerkzeugs (3) längs- und/oder quer zur Längsmittelachse des Handstücks gerichtet sind.

## Claims

1. Dental tooth-cleaning instrument (1) with an elongated handpiece which bears at its front end a tooth-cleaning tool (3) that is capable of being caused to vibrate by a motor-driven vibration generator (7) assigned to the tooth-cleaning instrument (1), said tooth-cleaning tool (3) comprising several wires (31) arranged side by side, the points of which are situated in a working surface (29) and which consist of a material that is capable of eroding a tooth deposit or a staining of the tooth surface by virtue of the vibrating movement, said tooth-cleaning instrument (1) being connected or capable of being detachably connected to a supply hose (6) comprising power lines and/or media lines,
**characterised in that**
the wires (31) consist of elastic synthetic material, are juxtaposed in the form of a bundle of wires and are received and secured in a pot-shaped tool head (17) which is detachably connected to a support pertaining to the tooth-cleaning tool (3).

2. Tooth-cleaning instrument according to Claim 1,
**characterised in that**
the working surface (29) is plane or curved or extends radially with respect to the longitudinal centre axis (28) of the tool head (18).

3. Tooth-cleaning instrument according to Claim 1 or 2,
**characterised in that**
the wires have a cross-sectional dimension from about 0.02 mm to 0.2 mm.

4. Tooth-cleaning instrument according to one of the preceding claims,
**characterised in that**
the wires have a cross-sectional dimension from about 0.05 mm to 0.08 mm.

5. Tooth-cleaning instrument according to one of the preceding claims,
**characterised in that**
the support is a shank (23) projecting from the handpiece.

6. Tooth-cleaning instrument according to Claim 5,
**characterised in that**
the shank (23) is of tubular construction.

7. Tooth-cleaning instrument according to Claim 5 or 6,
**characterised in that**
the tool head (17) is bent by an acute angle (W) with respect to the bottom end of the shank (23).

8. Tooth-cleaning instrument according to Claim 7,
**characterised in that**
the angle (W) amounts to about 30° to 60°.

9. Tooth-cleaning instrument according to Claim 8,
**characterised in that**
the angle (W) amounts to about 45°.

10. Tooth-cleaning instrument according to one of the preceding claims,
**characterised in that**
several tool heads (17) are provided with wires (31) which can optionally be connected to the support.

11. Tooth-cleaning instrument according to one of the preceding claims,
**characterised in that**
an illuminating device directed towards the tool head (17) or towards the treatment surface is assigned to said instrument.

12. Tooth-cleaning instrument according to Claim 11,
**characterised in that**
the illuminating device comprises an optical waveguide (11) with a surface for egress of light at the front end of the handpiece.

13. Tooth-cleaning instrument according to one of the preceding claims,
**characterised in that**
a rinsing and/or cooling device having an exit aperture (35a) for the rinsing and/or cooling medium directed towards the tool head (17) or towards the treatment site is assigned to said instrument.

14. Tooth-cleaning instrument according to one of the preceding claims,
**characterised in that**
a channel (24, 25) for a rinsing and/or cooling medium extends in the rear region of the tooth-cleaning tool (3) or over the entire length thereof, the orifice of said channel being directed towards the treatment site.

15. Tooth-cleaning instrument according to Claim 14,
**characterised in that**
the channel (25) extends through the bundle of wires.

16. Tooth-cleaning instrument according to one of the preceding claims,
**characterised in that**
the tooth-cleaning tool (3) is detachably connected to the handpiece.

17. Tooth-cleaning instrument according to Claim 16,
**characterised in that**
several tooth-cleaning tools (3) of differing materials, hardness, shape, rating (coarse, fine) and/or size are provided which can optionally be connected to the handpiece.

18. Tooth-cleaning instrument according to one of the preceding claims,
**characterised in that**
the handpiece is capable of being detachably connected to a connecting piece (5) by means of a plug-in/rotating coupling (4).

19. Tooth-cleaning instrument according to one of the preceding claims,
**characterised in that**
the amplitudes of vibration of the tooth-cleaning tool (3) are directed along and/or transverse to the longitudinal centre axis of the handpiece.

## Revendications

1. Instrument (1) de médecine dentaire pour le nettoyage des dents, comprenant une pièce à main allongée portant à son extrémité avant un outil de nettoyage des dents (3) qui peut être animé de vibrations sous l'action d'un générateur de vibrations (7) à entraînement par moteur, associé à l'instrument de nettoyage des dents (1), l'outil de nettoyage des dents (3) présentant plusieurs fils (31) disposés côte à côte dont les pointes sont situées sur une surface d'action (29) et qui sont constitués par un matériau capable d'éliminer un dépôt de tartre ou une coloration de la surface des dents par un mouvement de vibrations, l'instrument de nettoyage des dents (1) étant raccordé ou pouvant être raccordé de façon amovible à un tuyau d'alimentation (6) avec des conduites d'alimentation en énergie et/ou en fluide,
caractérisé par le fait
que les fils (31) sont constitués par une matière plastique élastique, sont disposés les uns contre les autres sous la forme d'un paquet de fils et sont montés et fixés dans une tête d'outil (17) en forme de pot qui est relié de façon amovible à un support de l'outil de nettoyage des dents (3).

2. Instrument de nettoyage des dents suivant la revendication 1,
caractérisé par le fait
que la surface d'action (29) est plane, incurvée ou s'étend radialement par rapport à l'axe central longitudinal (28) de la tête d'outil (17).

3. Instrument de nettoyage des dents suivant la revendication 1 ou 2,
caractérisé par le fait
que les fils présentent en section une dimension d'environ 0,02 mm à 0,2 mm.

4. Instrument de nettoyage des dents suivant l'une des revendications précédentes,
caractérisé par le fait
que les fils présentent en section une dimension d'environ 0,05 mm à 0,08 mm.

5. Instrument de nettoyage des dents suivant l'une des revendications précédentes,
caractérisé par le fait
que le support est un fût (23) faisant saillie à l'avant sur la pièce à main.

6. Instrument de nettoyage des dents suivant la revendication 5,
caractérisé par le fait
que le fût (23) est tubulaire.

7. Instrument de nettoyage des dents suivant la revendication 5 ou 6,
caractérisé par le fait
que la tête d'outil (17) est inclinée d'un angle aigu (W) par rapport à l'extrémité arrière du fût (23).

8. Instrument de nettoyage des dents suivant la revendication 7,
caractérisé par le fait
que l'angle (W) est compris entre environ 30 ° et 60 °.

9. Instrument de nettoyage des dents suivant la revendication 8,
caractérisé par le fait
que l'angle (W) s'élève à environ 45 °.

10. Instrument de nettoyage des dents suivant l'une des revendications précédentes,
caractérisé par le fait
qu'il est prévu plusieurs têtes d'outil (17) avec des fils (31), ces têtes pouvant être reliées de façon sélective au support.

11. Instrument de nettoyage des dents suivant l'une des revendications précédentes,
caractérisé par le fait
qu'un dispositif d'éclairage dirigé sur la tête d'outil (17) ou la surface de traitement lui est associé.

12. Instrument de nettoyage des dents suivant la revendication 11,
caractérisé par le fait
que le dispositif d'éclairage comprend une fibre optique (11) avec une surface de sortie de lumière à l'extrémité avant de la pièce à main.

13. Instrument de nettoyage des dents suivant l'une des revendications précédentes,
caractérisé par le fait
qu'un dispositif de rinçage et/ou de refroidissement avec une ouverture de sortie (35a) du fluide de rinçage et/ou de refroidissement qui est dirigée sur la tête d'outil (17) ou l'emplacement de traitement lui est associé.

14. Instrument de nettoyage des dents suivant l'une des revendications précédentes,
caractérisé par le fait
qu'un canal (24, 25) pour un fluide de rinçage et/ou de refroidissement s'étend dans la zone arrière de l'instrument de nettoyage dentaire (3) ou sur toute la longueur de ce dernier, l'orifice de ce canal étant dirigé sur sur l'emplacement de traitement.

15. Instrument de nettoyage des dents suivant la revendication 14,
caractérisé par le fait
que le canal (25) s'étend à travers le paquet de fils.

16. Instrument de nettoyage des dents suivant l'une des revendications précédentes,
caractérisé par le fait
que l'outil de nettoyage des dents (3) est relié de façon amovible à la pièce à main.

17. Instrument de nettoyage des dents suivant la revendication 16,
caractérisé par le fait
qu'il est prévu plusieurs outils de nettoyage des dents (3) présentant des matériaux, duretés, formes, efficacités (nettoyage grossier, nettoyage fin) et/ou tailles différents, ces outils pouvant être reliés sélectivement à la pièce à main.

18. Instrument de nettoyage des dents suivant l'une des revendications précédentes,
caractérisé par le fait
que la pièce à main peut être reliée de façon amovible à une pièce de raccordement (5) par un coupleur à enfichage/rotation (4).

19. Instrument de nettoyage des dents suivant l'une des revendications précédentes,
caractérisé par le fait
que les amplitudes des vibrations de l'outil de nettoyage des dents (3) sont dirigées longitudinalement et/ou transversalement par rapport à l'axe central longitudinal de la pièce à main.
